# EUROPÄISCHE PATENTSCHRIFT

(11) **EP 1 334 014 B1**
(45) Veröffentlichungstag und Bekanntmachung des Hinweises auf die Patenterteilung: **27.09.2006**
(21) Anmeldenummer: 01988669.6
(22) Anmeldetag: 26.10.2001
(51) Int. Cl.: B60S 1/40

(54) **VORRICHTUNG ZUM VERBINDEN EINES WISCHBLATTES, SOWIE EIN WISCHBLATT**
DEVICE FOR CONNECTING A WIPER BLADE, AND WIPER BLADE
DISPOSITIF D'ASSEMBLAGE D'UNE RACLETTE D'ESSUIE-GLACE, ET RACLETTE D'ESSUIE-GLACE RELATIVE

(30) Priorität: 28.10.2000 DE 10053602
(43) Veröffentlichungstag der Anmeldung: 13.08.2003
(73) Patentinhaber: ROBERT BOSCH GMBH, 70442 Stuttgart (DE)
(72) Erfinder: BASEOTTO, Michel, B-3550 Hasselt (BE); WILMS, Christian, B-3582 Beringen (BE); VANGEEL, Tom, B-3540 Herk-de-Stad (BE); VERELST, Hubert, B-3300 Tienen (BE); BREESCH, Frans, B-3840 Borgloon (BE)
(86) Internationale Anmeldenummer: PCT/DE2001/004017
(87) Internationale Veröffentlichungsnummer: WO 2002/034590

(56) Entgegenhaltungen:
- DE-A- 19 641 042

## Beschreibung

### Stand der Technik

Die Erfindung betrifft eine Vorrichtung zum Verbinden eines Wischblattes mit einem Wischerarm, sowie ein Wischblatt nach Gattung der unabhängigen Ansprüche.

Es ist schon eine Vorrichtung zum Verbinden eines Wischblattes mit einem Wischerarm, beispielsweise aus der DE-A-197 36 368 bekannt, bei der das Wischblatt ein Tragelement mit einer Wischleiste umfaßt und am Tragelement zur Verbindung mit dem Wischerarm des Kraftfahrzeugs eine Vorrichtung zur Verbindung befestigt ist. Diese Vorrichtung ist fest mit dem Wischblatt verbunden und muß leicht mit dem Wischerarm zu verbinden und zu lösen sein, da Wischblätter im Regelfall nicht von einem Fachmann, sondern vom Halter des Kraftfahrzeugs gewechselt werden.

Darüber hinaus müssen derartige Vorrichtungen zur Übertragung sehr großer Kräfte vom Wischerarm auf das Wischblatt geeignet sein, um ein sauberes Wischen, besonders bei hohen Geschwindigkeiten des Kraftfahrzeugs, zu gewährleisten.

Weiterhin sind bereits zahlreiche derartige Vorrichtungen, beispielsweise aus DE-A-27 56 317 bekannt, die zur Befestigung von konventionellen Wischblättern an Wischerarmen von Kraftfahrzeugen dienen. Diese können jedoch nicht auf Wischblätter übertragen werden, die uber kein Tragbügelsystem verfügen, an welchem der Wischerarm befestigt werden kann.

### Vorteile der Erfindung

Die erfindungsgemäße Vorrichtung nach Anspruch 1 zum Verbinden eines Wischblattes mit einem Wischerarm hat den Vorteil das Wischblatt durch eine Verschiebung in seiner Längsrichtung parallel zum Wischerarm mit demselben verbindbar ist. Dies wird durch ein Klammerteil, das am Wischblatt befestigt ist und das wiederum ein Zwischenteil trägt, erreicht. Dadurch wird eine optimale Befestigung des Wischblattes am Wischerarm erzielt, die stabil und kostengünstig ist und mit dem auch sehr lange Wischerarme, die das Wischblatt in seiner vollen Länge einschließen, einfach, sicher und schnell mit dem Wischblatt verbunden werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Klammerteil am Tragelement befestigt ist, da das Tragelement das wesentliche Element zur Kraftübertragung vom Wischerarm auf die Wischleiste darstellt und die Kraft, die vom Wischerarm auf das Wischblatt übertragen werden soll, auf diese Weise optimal angreift.

Dabei ist es besonders Vorteilhaft, wenn ein einziges Klammerteil und ein einziges Zwischenteil vorgesehen sind, und diese mittels einer ersten Rastverbindung verbunden sind. Dadurch ist die Vorrichtung in der Fertigung leicht herstellbar, da das Zwischenteil beispielsweise als separates Spritzgußteil hergestellt werden kann und bei der Endmontage auf das Klammerteil aufgesteckt und ohne Werkzeug mit diesem verbunden wird.

Weiterhin ist es vorteilhaft, wenn das Zwischenteil das Klammerteil übergreift, da auf diese Weise die Form der Vorrichtung im Wesentlichen durch das Zwischenteil bestimmt ist. Somit ist das Klammerteil vor Korrosion geschützt. Das Zwischenteil kann darüber hinaus Anlageflächen ausbilden durch die die Führung des Wischblattes innerhalb des Wischerarms verbessert wird.

Besonders vorteilhaft ist es, wenn das Zwischenteil mittels einer zweiten Rastverbindung am Wischerarm befestigt werden kann. Verbindungsvorgänge mittels Rastverbindungen können von einem Laien, wie dem Fahrzeuglenker, in einfacher Weise durchgeführt werden und geben darüber hinaus einen sicheren Halt des Verbindungsstückes am Wischerarm. Dadurch ergibt sich eine einfache, schnelle und sichere Vorrichtung zum Verbinden des Wischblattes mit dem Wischerarm.

Weiterhin ist es als Vorteil anzusehen, wenn das Klammerteil einen im Wesentlichen rechteckigen Boden aufweist, entlang dessen Längskanten Lateralflanken senkrecht herausragen, so daß sich ein etwa U-förmiges Profil ergibt. Der Boden kann so auf dem Tragelement befestigt werden und an den Lateralflanken können so weitere Führungs- und Sicherungselemente zur Verbesserung der Verbindung zwischen Wischblatt und Wischerarm ausgebildet werden.

Dabei ist von besonderem Vorteil, wenn das Zwischenteil Nuten zur Aufnahme der Lateralflanken aufweist, die dadurch vom Zwischenteil überdeckt werden. Die Wande des Zwischenteils wirken so anlaufscheibenartig zwischen Wischerarm und Klammerteil, wodurch die Führung des Wischblatts verbessert wird.

Weiterhin ist es vorteilhaft, wenn der Wischerarm einen Bolzen aufweist, der an mindestens einem Zwischenteil befestigbar ist. Ein Bolzen ist in einen Wischerarm schnell und kostengünstig einbringbar und bietet ausreichend Stabilität zur Übertragung der Kräfte.

Das erfindungsgemäße Wischblatt mit den Merkmalen des Anspruchs 10, hat den Vorteil, dass es mit dem Wischerarm durch eine Längsverschiebung verbindbar ist, einfach und kostengünstig herzustellen ist und sehr stabil ausgebildet ist, so daß es den Ansprüchen die moderne Kraftfahrzeuge an die Wischblätter stellen in geradezu hervorragender Weise gerecht wird.

### Zeichnungen

Ausführungsbeispiele der Erfindung sind in den Zeichnungen dargestellt und in der nachfolgenden Beschreibung näher erläutert. Es zeigen:
- Figur 1: einen Wischerarm, ein Wischblatt und eine Vorrichtung zum Verbinden derselben in einer perspektivischen Darstellung,
- Figur 2: eine erfindungsgemäße Vorrichtung im Detail,
- Figur 3: das Zwischenteil einer erfindungsgemäßen Vorrichtung in perspektivischer Darstellung,
- Figur 4: das Zwischenteil einer erfindungsgemäßen Vorrichtung in einer perspektivischen Darstellung von schräg oben,
- Figur 5: eine erfindungsgemäße Vorrichtung im Längsschnitt,
- Figur 6: einen Wischerarm sowie ein Wischblatt und eine Vorrichtung zum Verbinden derselben in einer Variante,
- Figur 7: die erfindungsgemäße Vorrichtung zum Verbinden gemäß der Variation aus Figur 5,
- Figur 8: das Klammerteil der Vorrichtung aus Figur 5 im Detail,
- Figur 9: das Zwischenteil der Vorrichtung aus Figur 5 im Detail und
- Figur 10: die erfindungsgemäße Vorrichtung aus Figur 5 beim Verbinden von Wischerarm und Wischblatt.

### Beschreibung der Ausführungsbeispiele

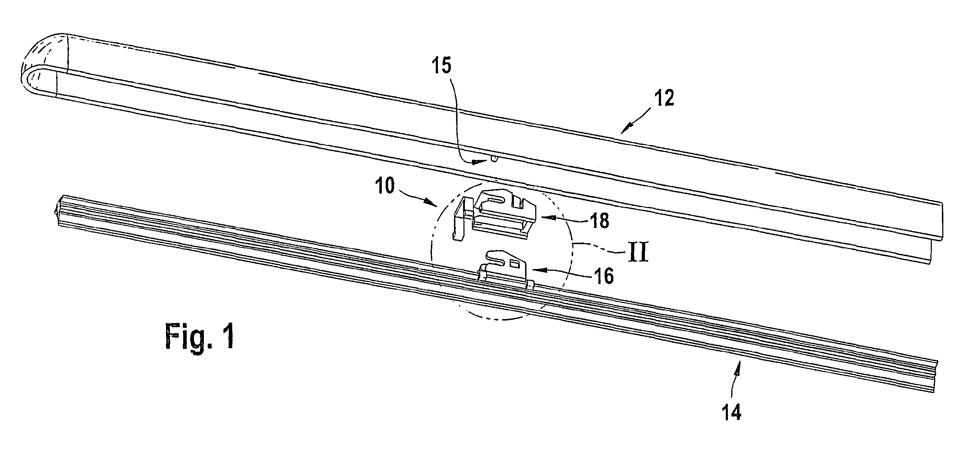

In Figur 1 ist eine erfindungsgemäße Vorrichtung 10, ein Wischerarm 12, sowie ein Wischblatt 14 in einer perspektivischen Darstellung gezeigt. Die Vorrichtung 10 umfaßt im Wesentlichen ein Klammerteil 16, welches am Wischblatt 14 befestigt ist, und ein Zwischenteil 18, welches in montiertem Zustand am Klammerteil 16 befestigt ist und mit einem Verbindungselement 15 des Wischerarms 12 verbindbar ist. Das Verbindungselement 15 ist als Bolzen ausgebildet der sich quer durch das U-förmige Profil des Wischerarms 12 erstreckt.

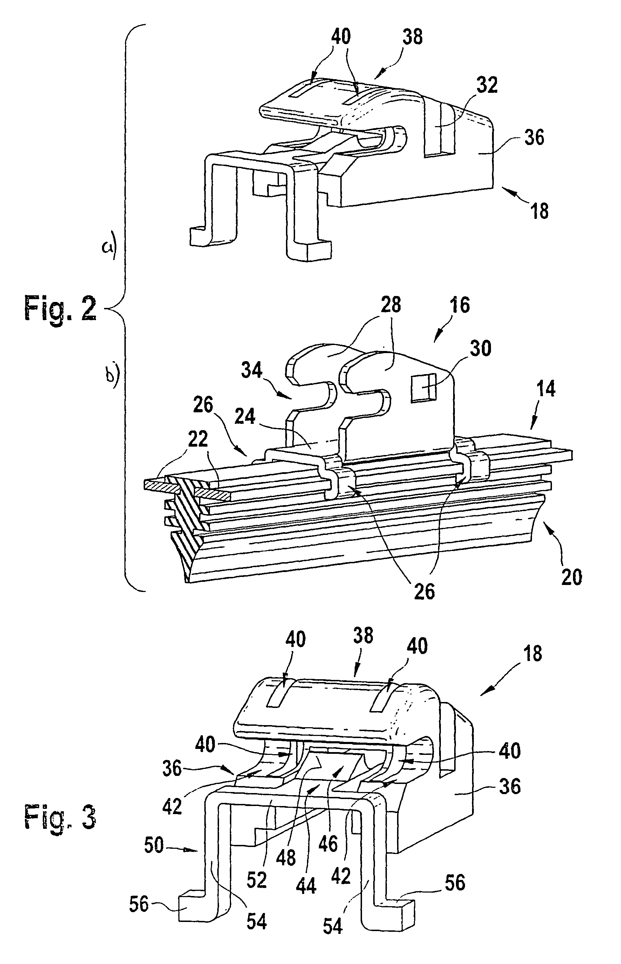

In Figur 2 ist die Vorrichtung 10 und das wischblatt 14 aus Figur 1 detailliert dargestellt. Das Wischblatt 14 umfaßt im Wesentlichen eine Wischleiste 20, die von zwei als Tragelement 22 dienenden Federschienen gehalten wird. Die Federschienen sind als längliche, flache und entlang ihrer Längserstreckung vorgebogene Metallstreifen ausgebildet, die in unbelasteten Zustand eine konkave Unterseite aufweisen, die im Betrieb der Wischfläche zugewandt ist und die Wischleiste trägt. An der konvexen Oberseite des Tragelements 22 ist das Klammerteil 16 der Vorrichtung 10 befestigt.

Das Klammerteil 16 besteht im Wesentlichen aus einem rechteckigen Boden 24, der am Tragelement 22 befestigt, beispielsweise angeschweißt ist. Darüber hinaus sind an den Enden der Längsseiten des rechteckigen Bodens 24 einstückig Klammern 26 angeformt und herausgebogen, die sich teilweise um das Tragelement 22 klammern und so die Befestigung verbessern. Im mittleren Bereich der Längsseiten des Bodens 24, zwischen den Klammern 26, sind ebenfalls einstückig Lateralflanken 28 wandartig angeordnet, die senkrecht vom Boden 24 herausragen, und von im Wesentlichen rechteckiger Gestalt sind. Auf diese Weise ergibt sich ein im Wesentlichen U-förmiges Profil des Klammerteils 16, dessen Basis an den Tragelementen 22 befestigt ist.

In den Lateralflanken 28 sind Befestigungselemente 30 angeordnet, mit Hilfe derer das Zwischenteil 18 am Klammerteil 26 befestigt werden kann. Die Befestigungselemente 30 sind als Aussparungen ausgebildet, in die Clipse 32 des Zwischenteils 18 eingreifen können und eine erste Rastverbindung 31 bilden. Weiterhin sind in den Lateralflanken 28 des Klammerteils 16 erste Längsnuten 34 eingebracht, die sich parallel zu den Tragelementen 22 und damit parallel zum Boden 24 erstrecken. Diese ersten Längsnuten 34 sind derart ausgebildet, daß die Verbindungselemente 15 des Wischerarms 12 dort einbringbar sind.

Das Zwischenteil 18 umfaßt im Wesentlichen zwei Seitenwände 36, welche jeweils auf einer ihrer Längsseiten durch eine Deckfläche 38 verbunden sind, so dass ein im Wesentlichen im Querschnitt umgekehrt U-förmiges Profilteil entsteht. Die Seitenwände 36 des Zwischenteil 18 weisen entlang ihrer Längserstreckung Nuten 40 auf, in die die Lateralflanken 28 des Klammerteils 16 aufgenommen werden können, so daß das Zwischenteil 18 das Klammerteil 16 übergreift.

Korrespondierend zu den ersten Längsnuten 34 des Klammerteils 16 weisen die Seitenwände 36 des Zwischenteils 18 zweite Längsnuten 42 auf, die so angeordnet sind, dass dann, wenn das Zwischenteil 18 am Klammerteil 16 verrastet ist, eine einzige Quernut entsteht, in der das als Bolzen ausgebildete Verbindungselement 15 des Wischerarms 12 aufgenommen werden kann.

In Figur 3 ist das Zwischenteil 18 detaillierter dargestellt. Um ein Herausgleiten des Verbindungsmittels 15 des Wischerarms 12 aus dem Zwischenteil 18 zu verhindern, ist im Innern des U-förmigen Profils des Zwischenteils 18, zwischen den beiden Seitenwänden 36 und unterhalb der zweiten Längsnut 42 eine Zunge 44 angeordnet, die sich in montierter Position etwa parallel zum Boden 24 des Klammerteils 16 erstreckt. Diese Zunge 44 ist in dem Bereich des Zwischenteils 18 befestigt, der der zweiten Längsnut 42 abgewandt ist, und daher am anderen, der zweiten Längsnut 42 zugewandten Seite, frei und damit elastisch beweglich.

Zur Arretierung des Bolzens 15 innerhalb der Längsnut 34, 42 weist die Zunge 44 eine Arretierungsnocke 46 auf, die auf der Öffnungsseite der Längsnut 42 eine Anlauffläche 48 aufweist. Zunge 44 mit der Arretierungsnocke 46 und Längsnut 42 bilden auf diese Weise die zweite Rastverbindung 49, die Wischblatt 14 und Wischerarm 12 zu verbinden vermag.

Zur leichteren Beweglichkeit der Zunge 44, ist an diese ein im Wesentlichen U-förmiges Bewegungselement 50 angeordnet, welches sich vom freien Ende der Zunge 44 senkrecht zur Ebene der Zunge 44 nach unten, in Richtung des Klammerteils 16 erstreckt. Die Basis 52 dieses U-förmigen Bewegungselementes 50 ist dabei etwa so breit wie der Abstand der beiden Seitenwände 36, mindestens jedoch so breit wie das Tragelement 22, so daß die Schenkel 54 am Tragelement 22 vorbeigleiten können. Die Länge der Schenkel 54 des U-förmigen Bewegungselements 50 ist dabei so gewählt, dass sie in montierter Position aus dem Profil des Wischerarms 12 herausragen. An den Enden der Schenkel 54 sind Greifelemente 56 angeordnet, die sich jeweils seitlich nach außen erstrecken und so ein Bewegen der Zunge 44 ermöglichen, so daß diese in montierter Position, zur Freigabe des Verbindungsmittels 15 bewegt werden kann.

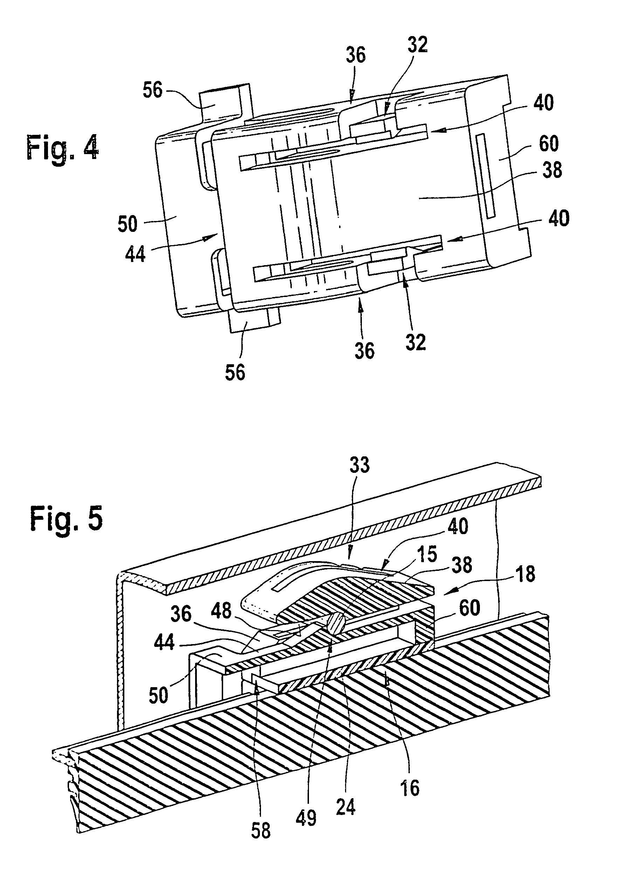

In Figur 4 ist das Zwischenteil 18 in einer schrägen, perspektivischen Sicht von oben dargestellt. Die Seitenwände 36 sind durch die Deckfläche 38 miteinander verbunden. In den Seitenwänden 36 sind die Seitenwandnuten 40 zur Aufnahme der Lateralflanken 28 des Klammerteils 16 angeordnet. Die ersten Rastverbindungen 31, zur Befestigung des Zwischenteils 18 am Klammerteil 16, sind durch die Clipse 32, die ebenfalls in den Seitenwänden 36 angeordnet sind, dargestellt. Aus der Längserstreckung des Profils heraus ragt die Zunge 44, welche sich im Bewegungselement 50 fortsetzt, an dem die Greifelemente 56 angeordnet sind.

In Figur 5 ist ein Längsschnitt durch ein Zwischenstück 18 in montierter Position dargestellt. Die Seitenwand 36 ist an der vom Boden 24 des Klammerteils 16 abgewandten Seite durch die Deckfläche 38 mit der nicht dargestellten zweiten Seitenwand 36 verbunden. Die Seitenwand 36 selbst weist die Seitenwandnut 40 auf, in der die hier der Einfachheit halber nicht dargestellte Lateralflanke 28 des Klammerteils 16 aufgenommen ist. Das Zwischenteil 18 ist durch eine in der Seitenwand 36 angeordnete Stufe 58 an den Randern des Bodens 24 des Klammerteils 16 aufgesetzt. Auf der hinteren Querseite des Zwischenteils 18, die dem freien Ende der Zunge 44 abgewandt ist, ist das Zwischenteil 18 über einen kleinen Querabschnitt 60 ebenfalls auf dem Boden 24 des Klammerteils 16 abgestützt. An der dem Boden 24 abgewandten Seite des Querabschnitts 60, ist die Zunge 44 befestigt, die auf diese Weise frei in den Raum zwischen den Seitenwänden 36 hineinragt und die Arretierungsnocke 46 trägt. Die Arretierungsnocke 46 ist dabei derart ausgebildet, dass das Verbindungselement 15 des Wischerarms 12 genau zwischen einer Seite der Arretierungsnocke 46 und dem Nutgrund der ersten und/oder zweiten Längsnute 34, 42 fest gehalten ist.

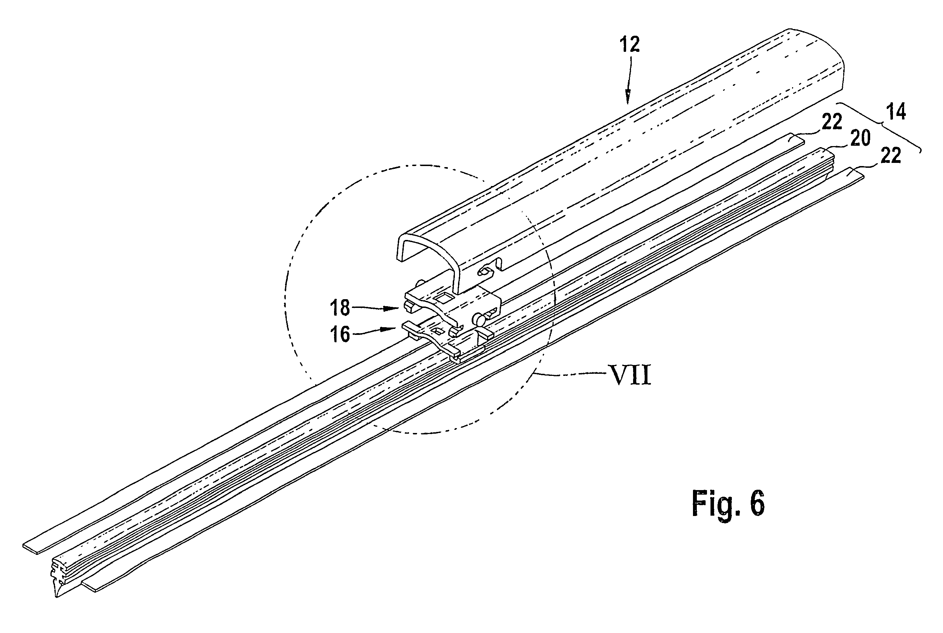

In Figur 6 ist eine erfindungsgemäße Vorrichtung 10 in einer Variation dargestellt. Die Vorrichtung 10 umfaßt wiederum ein Zwischenteil 18 und Klammerteil 16, welches am Wischblatt 14 oder genauer, am Tragelement 22 des Wischblatts 14 befestigt ist. Das Wischblatt 14 besteht wiederum aus der Wischleiste 20, die vom Tragelement 22, welches aus zwei flachen, länglichen Federschienen besteht, die aus Metall oder Kunststoff ausgebildet sind, gehalten wird. Der Wischerarm 12 ist wiederum länglich und von im Querschnitt umgekehrt U-förmiger Gestalt.

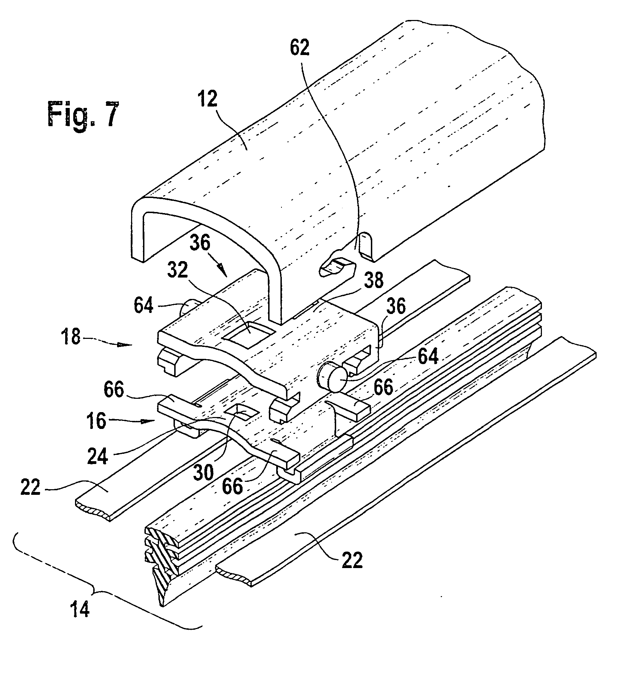

In Figur 7 ist die Vorrichtung 10 aus Figur 6 mit dem Ende des Wischerarms 12 und einem Ausschnitt des Wischblattes 14 im Detail dargestellt. Der Wischerarm 12 weist an seinem freien Ende eine L-förmige Wischarmnut 62 auf, in die am Zwischenteil 18 angeordnete Zwischenteilbolzen 64 eingreifen können und durch eine Verschiebung in Längsrichtung des Wischblattes 14 und Wischerarms 12 verbunden werden können. Dazu weist die Wischarmnut 62 eine Raste 76 auf, die den Zwischenteilbolzen 64 verrastet, wodurch die zweite Rastverbindung 49 entsteht.

Das Klammerteil 16 besteht wiederum aus dem Boden 24, der an den Tragelementen 22 befestigt, beispielsweise angeschweißt, ist. In der Ebene des Bodens 24 ragen aus diesem jeweils an den Enden der Längskanten desselben Führungsnasen 66 quer heraus. In der Mitte des Bodens sind Befestigungselemente 30 angeordnet, die wiederum als Aussparungen ausgebildet sind, in die Clipse 32 des Zwischenteils 18 einrasten können und somit die erste Rastverbindung 31 bilden.

Das Zwischenteil 18 ist im Querschnitt von im Wesentlichen umgekehrt U-förmiger Gestalt mit einer Deckfläche 38 als Basis und mit den Seitenwänden 36 als Schenkel. Mit seiner Basis vermag das Zwischenteil 18 sich direkt an das Klammerteil 16 anzuschmiegen. An den Schenkeln des Zwischenteils 18 sind Führungsnuten 68 angeordnet, die sich parallel zur Basis des U-Profils des Zwischenteils 18 erstrecken. Auf diese Weise kann das Zwischenteil 18 auf das Klammerteil 16 aufgesetzt werden und durch eine Verschiebung entlang der Längsachse des Wischblattes 14 am Klammerteil 16 fixiert werden. In seiner Endposition rastet der Klips 32 in die Aussparung 30 ein, so dass ein Zurückgleiten des Zwischenteiles 18 verhindert wird. Dadurch wird vermieden, daß die Führungsnasen 66 aus den Führungsnuten 68 gleiten. Auf den äußeren Flächen der Schenkel des Zwischenteils 18 sind die Zwischenteilbolzen 64 direkt angeformt, welche in Wischarmnuten 62 eingeführt werden können.

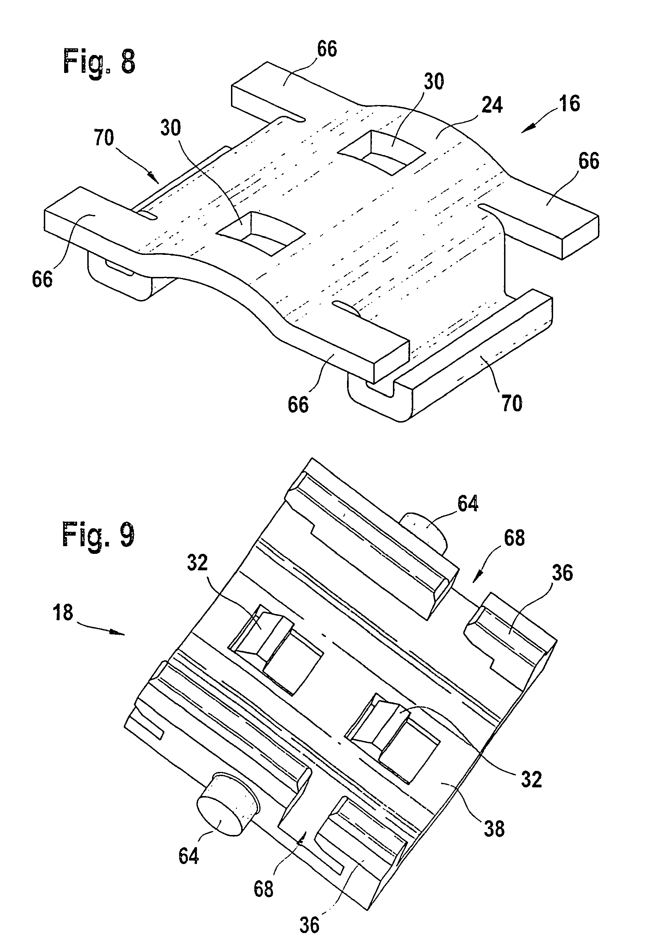

In Figur 8 ist das Klammerteil 16 nochmals detailliert dargestellt. Es ist von im Wesentlichen flacher Gestalt mit einem lediglich leicht gewölbtem, rechteckigen Boden 24, in dem sich Aussparungen als Befestigungselemente 30 befinden, die zur Aufnahme von Clipsen 32 des Zwischenteils 18 dienen und so die erste Rastverbindung 31 erzeugen. An den Enden der Längskanten des rechteckigen Bodens 24 sind in Querrichtung die Fuhrungsnasen 66 angeordnet. In dem verbleibenden mittleren Bereich zwischen jeweils zwei Führungsnasen 66 sind weitere Führungselemente 70 angeordnet, die beispielsweise Anlageflächen für den Wischerarm 12 bilden. Dieses weitere Führungselement 70 ist von im Wesentlichen U-förmiger Gestalt, so dass das Zwischenteil 18 beim Zusammenfügen mit dem Klammerteil 16 in das Innere des Führungselementes 70 eindringen kann.

In Figur 9 ist das Zwischenteil 18 nochmals im Detail dargestellt. Das Zwischenteil 18 ist im Querschnitt von im Wesentlichen U-förmiger Gestalt mit einer Deckfläche 38 als Basis und zwei Seitenwänden 36 als Schenkel. Die Deckfläche 38 ist so ausgebildet, dass sie sich direkt an den Boden 24 des Klammerteils 16 zu schmiegen vermag und weist deshalb eine leichte Wölbung auf. Weiterhin sind an der Deckfläche 38 die Clipse 32 angeordnet, die mit den Befestigungselementen 30 im Boden 24 des Klammerteils 16 zusammenwirken. In den Seitenwänden 36 sind Führungsnuten 68 angeordnet, die sich parallel zur Basis erstrecken. In diese Fuhrungsnuten 68 vermögen die Führungsnasen 66 des Klammerteils 16 einzugreifen, so dass das Zwischenteil 18 auf das Klammerteil 16 aufgesetzt werden kann, durch eine Verschiebung entlang seiner Längsachse mit dem Klammerteil 16 durch die erste Rastverbindung 31 verrastet wird und das Klammerteil 18 somit übergreift. An den Seitenwänden 36 sind die Zwischenteilbolzen 64 seitlich nach außen angeformt, die mit den Verbindungselementen 15, also der Wischarmnut 62 des Wischerarms 12, zusammenwirken. Die Zwischenteilbolzen 64 sind als zylindrische Bolzen ausgeformt, die koaxial am Zwischenteil 18 angeordnet sind.

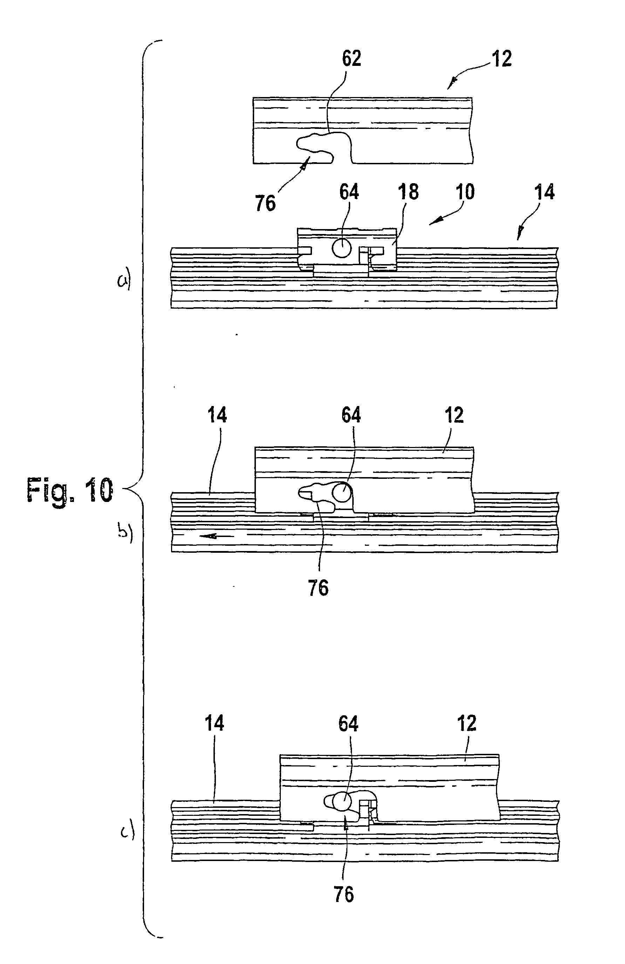

In Figur 10 ist die Vorrichtung 10, die an einem Wischblatt 14 befestigt ist, beim Verbindungsvorgang mit einem Wischerarm 12 gezeigt. Der Wischerarm 12 weist die L-förmige Wischarmnut 62 auf, an der die Raste 76 angeformt ist. In diese vermag der Zwischenteilbolzen 64 einzugreifen. Nach dem Einsetzen des Wischblattes 14 in die Wischarmnut 62 wird das Wischblatt 14 mittels einer Verschiebung entlang seiner Längsachse, die gleichzeitig die Längsachse des Wischerarms 12 ist, mittels der Raste 76 in der Wischarmnut 62 verrastet.

## Patentansprüche

1. Vorrichtung zum Verbinden eines Wischblattes (14) mit einem Wischerarm (12), insbesondere mit einem Wischerarm (12) eines Kraftfahrzeugs, wobei der Wischerarm (12) und das Wischblatt (14) von im wesentlichen länglicher Gestalt sind und das Wischblatt (14) mindestens ein Tragelement (22) umfasst, das mindestens eine Wischleiste (20) trägt, wobei mindestens ein Klammerteil (16) am Wischblatt (14) befestigt ist, **dadurch gekennzeichnet, dass** an dem Klammerteil (16) mindestens ein Zwischenteil (18) befestigt ist, und das Wischblatt (14) durch eine Verschiebung in seiner Längsrichtung im wesentlichen parallel zum Wischerarm (12) mit demselben verbindbar ist.

2. Vorrichtung nach Anspruch 1, **dadurch gekennzeichnet, daß** das mindestens eine Klammerteil (16) an dem mindestens einen Tragelement (22) befestigt ist.

3. Vorrichtung nach einem der vorhergehenden Ansprüche, **dadurch gekennzeichnet, daß** ein einziges Klammerteil (16) und ein einziges Zwischenteil (18) vorgesehen sind und das Klammerteil (16) und das Zwischenteil (18) mittels einer ersten Rastverbindung (31) verbunden sind.

4. Vorrichtung nach einem der vorhergehenden Ansprüche, **dadurch gekennzeichnet, daß** ein einziges Klammerteil (16) und ein einziges Zwischenteil (18) vorgesehen sind wobei das Zwischenteil (18) das Klammerteil (16) übergreift.

5. Vorrichtung nach einem der vorhergehenden Anspruche, **dadurch gekennzeichnet, daß** ein einziges Zwischenteil (18) vorgesehen ist das mittels einer zweiten Rastverbindung (49) am Wischerarm (12) befestigbar ist.

6. Vorrichtung nach einem der vorhergehenden Ansprüche, **dadurch gekennzeichnet, daß** das Klammerteil (16) einen im wesentlichen rechteckigen Boden (24) aufweist, der auf mindestens einem Tragelement (22) befestigt, insbesondere angeschweißt ist und entlang den Längskanten des Bodens (24) Lateralflanken (28) senkrecht aus dem Boden (24), in der der Wischleiste (20) abgewandten Richtung herausragen.

7. Vorrichtung nach Anspruch 6, **dadurch gekennzeichnet, daß** das Zwischenteil (18) Seitenwandnuten (40) zur Aufnahme der Lateralflanken (28) aufweist.

8. Vorrichtung nach einer der vorhergehenden Ansprüche, **dadurch gekennzeichnet, daß** der Wischerarm (12) ein vorzugsweise als Bolzen ausgebildetes Verbindungselement (15) aufweist, das an mindestens einem Zwischenteil (18) befestigbar ist.

9. Vorrichtung nach einem der vorhergehenden Ansprüche, **dadurch gekennzeichnet, daß** das Zwischenteil (18) mindestens einen Zwischenteilbolzen (64) aufweist, der am Wischerarm (12) befestigbar ist.

10. Wischblatt (14), insbesondere für ein Kraftfahrzeug, von im wesentlichen länglicher Gestalt, mit einem als Federschiene ausgebildeten Tragelement (22), welche in entspanntem Zustand eine konvexe und eine konkave Seite aufweist, einer auf der konkaven Seite der Federschiene befestigten Wischleiste (20) und einer auf der konvexen Seite der Federschiene angeordneten Vorrichtung (10) zur Verbindung des Wischblatts (14) mit einem Wischerarm, welche mindestens ein Klammerteil (16) umfasst, **dadurch gekennzeichnet, dass** die Vorrichtung (10) mindestens ein Zwischenteil (18) umfasst, wobei das mindestens eine Klammerteil (16) und mindestens ein Zwischenteil (18) derart ausgebildet sind, dass das Wischblatt (14) mit dem Wischerarm (12) durch eine Längsverschiebung im wesentlichen parallel zum Wischerarm (12) mit demselben verbindbar ist.

## Claims

1. Device for connecting a wiper blade (14) to a wiper arm (12), in particular to a wiper arm (12) of a motor vehicle, the wiper arm (12) and the wiper blade (14) being of substantially elongate form and the wiper blade (14) comprising at least one support element (22), which supports at least one wiper strip (20), at least one clip element (16) being fixed on the wiper blade (14), **characterized in that** at least one intermediate element (18) is fixed on the clip element (16), and the wiper blade (14) can be connected to the wiper arm (12) by displacement in its longitudinal direction, substantially parallel to the wiper arm (12).

2. Device according to Claim 1, **characterized in that** the at least one clip element (16) is fixed on the at least one support element (22).

3. Device according to any of the preceding claims, **characterized in that** a single clip element (16) and a single intermediate element (18) are provided, and the clip element (16) and the intermediate element (18) are connected by means of a first latching connection (31).

4. Device according to any of the preceding claims, **characterized in that** a single clip element (16) and a single intermediate element (18) are provided, the intermediate element (18) fitting over the clip element (16).

5. Device according to any of the preceding claims, **characterized in that** a single intermediate element (18) is provided, which can be fixed on the wiper arm (12) by means of a second latching connection (49).

6. Device according to any of the preceding claims, **characterized in that** the clip element (16) has a substantially rectangular base (24), which is fixed on at least one support element (22), in particular welded on, and lateral flanks (28) project perpendicularly from the base (24), in the direction away from the wiper strip (20), along the longitudinal edges of the base (24).

7. Device according to Claim 6, **characterized in that** the intermediate element (18) has side-wall slots (40) to receive the lateral flanks (28).

8. Device according to any of preceding claims, **characterized in that** the wiper arm (12) has a connecting element (15), which is preferably designed as a pin and can be fixed on at least one intermediate element (18).

9. Device according to any of the preceding claims, **characterized in that** the intermediate element (18) has at least one intermediate-element pin (64), which can be fixed on the wiper arm (12).

10. Wiper blade (14), in particular for a motor vehicle, of substantially elongated form, with a support element (22) designed as a spring rail, which has a convex and a concave side in the relaxed condition, with a wiper strip (20) fixed on the concave side of the spring rail, and with a device (10), arranged on the convex side of the spring rail, for connecting the wiper blade (14) to a wiper arm, the device (10) comprising at least one clip element (16), **characterized in that** the device (10) comprises at least one intermediate element (18), the at least one chip element (16) and at least one intermediate element (18) being designed in such a way that the wiper blade (14) can be connected to the wiper arm (12) by a longitudinal displacement substantially parallel to the wiper arm (12).

## Revendications

1. Dispositif pour relier un balai d'essuie-glace (14) à un bras d'essuie-glace (12) notamment au bras d'essuie-glace (12) d'un véhicule automobile,
le bras d'essuie-glace (12) et le balai d'essuie-glace (14) étant de forme essentiellement allongée et le balai d'essuie-glace (14) comportant au moins un élément de support (22) portant au moins une lame d'essuyage (20), avec au moins une pièce en forme de pince (16) fixée au balai d'essuie-glace (14),
**caractérisé en ce qu'**
au moins une pièce intermédiaire (18) est fixée à la pièce en forme de pince (16), et le balai d'essuie-glace (14) se relie à cette pièce intermédiaire par translation dans sa direction longitudinale, pratiquement parallèle au bras d'essuie-glace (12).

2. Dispositif selon la revendication 1,
**caractérisé en ce que**
la pièce en forme de pince (16) est fixée à au moins un élément de support (22).

3. Dispositif selon l'une des revendications précédentes,
**caractérisé par**
une seule pièce en forme de pince (16) et une seule pièce intermédiaire (18), et
la pièce en forme de pince (16) et la pièce intermédiaire (18) sont reliées l'une à l'autre par une première liaison par enclipsage (31).

4. Dispositif selon l'une des revendications précédentes,
**caractérisé par**
une unique pièce en forme de pince (16) et une unique pièce intermédiaire (18), la pièce intermédiaire (18) chevauchant la pièce en forme de pince (16).

5. Dispositif selon l'une des revendications précédentes,
**caractérisé par**
une unique pièce intermédiaire (18) fixée au bras d'essuie-glace (12) par une seconde liaison par enclipsage (49).

6. Dispositif selon l'une des revendications précédentes,
**caractérisé en ce que**
la pièce en forme de pince (16) comporte un fond (24) principalement rectangulaire fixé, notamment soudé, sur au moins un élément de support (22) et le long des arêtes longitudinales du fond (24), des flancs latéraux (28) sont en saillie perpendiculairement par rapport au fond (24) dans la direction opposée à celle de la lame d'essuyage (20).

7. Dispositif selon la revendication 6,
**caractérisé en ce que**
la pièce intermédiaire (18) comporte des rainures de paroi latérale (40) pour recevoir les flancs latéraux (28).

8. Dispositif selon l'une des revendications précédentes,
**caractérisé en ce que**
le bras d'essuie-glace (12) comporte un élément de liaison (15) réalisé de préférence sous la forme d'un goujon qui se fixe à au moins une pièce intermédiaire (18).

9. Dispositif selon l'une des revendications précédentes,
**caractérisé en ce que**
la pièce intermédiaire (18) comporte au moins un goujon intermédiaire (64) fixé au bras d'essuie-glace (12).

10. Balai d'essuie-glace (14) notamment de véhicule automobile, de forme principalement allongée, ayant un élément de support (22) en forme de rail élastique qui, à l'état détendu, a un côté convexe et un côté concave, ainsi qu'une lame d'essuyage (20) fixée sur le côté concave du rail élastique, et avec un dispositif (10) prévu sur le côté convexe du rail élastique ayant au moins une pièce en forme de pince (16) pour relier le balai d'essuie-glace (14) à un bras d'essuie-glace,
**caractérisé en ce que**
le dispositif (10) comporte au moins une partie intermédiaire (18),
cette pièce en forme de pince (16) et la pièce intermédiaire (18) étant réalisées pour que le balai d'essuie-glace (14) soit relié au bras d'essuie-glace (12) par un coulissement longitudinal principalement parallèle au bras d'essuie-glace (12).
